Europäisches Patentamt

European Patent Office

Office européen des brevets

(11) Numéro de publication: **0 095 429**

**A1**

## (12) DEMANDE DE BREVET EUROPEEN

(21) Numéro de dépôt: **83401056.3**

(22) Date de dépôt: **26.05.83**

(51) Int. Cl.³: **B 23 K 9/08**

(30) Priorité: **26.05.82 FR 8209183**

(43) Date de publication de la demande:
**30.11.83 Bulletin 83/48**

(84) Etats contractants désignés:
**BE DE GB IT NL**

(71) Demandeur: **CREUSOT-LOIRE**
**42 rue d'Anjou**
**F-75008 Paris(FR)**

(72) Inventeur: **Peigney, Alain**
**Lotissement "Les plantes" No. 3**
**F-71240 Saint-Loup de Varennes(FR)**

(72) Inventeur: **Mathieu, Jacques**
**29 rue Docteur Laennec**
**F-71100 Chalon-Sur-Saone(FR)**

(74) Mandataire: **Le Brusque, Maurice et al,**
**CREUSOT-LOIRE 15 rue Pasquier**
**F-75383 Paris Cedex 08(FR)**

(54) Dispositif de soudage à arc électrique.

(57) Dispositif de soudage à arc électrique destiné à l'assemblage de deux pièces creuses, disposées de façon que leur cavité respective soit située dans le prolongement l'une de l'autre. Ce dispositif comprend une tête de soudage à arc électrique (4) introduite dans la cavité (3, 7) des deux pièces, cette tête étant montée mobile à l'intérieur de la cavité en restant située au niveau du plan de joint (7) des deux pièces, une bobine électromagnétique (6) fixe disposée de façon à entourer au moins l'une des deux pièces à souder, en créant ainsi, au niveau de l'arc électrique (5), un champ électromagnétique B1 situé perpendiculairement au plan de joint (9) des deux pièces, et un moyen de commande de l'inversion périodique dudit champ magnétique, créant en conséquence un balayage longitudinal de l'arc électrique (5).

Fig 1

EP 0 095 429 A1

"Dispositif de soudage à arc électrique"

La présente invention concerne un dispositif de soudage à arc électrique comprenant un système de balayage de cet arc électrique.

Pour réaliser une soudure électrique le long d'un joint entre deux pièces métalliques, on utilise fréquemment une tête de soudure que l'on déplace à une faible distance des pièces de façon à établir un arc électrique qui génère le cordon de soudure au niveau du joint entre les deux pièces. On a depuis longtemps cherché à perfectionner les dispositifs de soudage en vue d'obtenir des soudures électriques de très bonne qualité. On a ainsi conçu des dispositifs de soudage à arc électrique dont la tête de soudage se déplace automatiquement devant la pièce. On a aussi cherché à réaliser des cordons de soudure de différentes formes et caractéristiques en définissant, pour chaque cas spécifique, les valeurs optimales des différents paramètres de soudage, tels que la vitesse, l'intensité de l'arc, la quantité de métal d'apport, etc ... . On a aussi proposé d'imposer à l'arc électrique des déplacements alternatifs dans une direction perpendiculaire à la direction du joint à souder, de façon à obtenir une très bonne répartition du cordon de soudure le long du joint. Un tel balayage transversal de l'arc électrique peut être obtenu par un système mécanique de déplacement transversal de l'électrode ou par la création au niveau de l'arc électrique d'un champ magnétique suivant une direction parallèle au cordon de soudure. Un tel dispositif de balayage pour soudure électrique est décrit, par exemple, dans la demande de brevet français n° 81-00724 déposée le 16 Janvier 1981.

Les dispositifs de balayage de l'arc connus actuellement ont pour effet d'étaler la soudure en limitant par conséquent sa profondeur, et présentent aussi l'inconvénient d'augmenter notablement l'encombrement de la tête de soudage sur laquelle ils sont montés.

L'invention vise à pallier ces inconvénients en proposant un dispositif de soudage électrique permettant d'obtenir un cordon de soudure plus profond et plus régulier, tout en maintenant minimum l'encombrement de la tête de soudage.

L'invention concerne plus particulièrement un dispositif de soudage à arc électrique destiné à l'assemblage de deux pièces creuses, disposées de façon que leur cavité respective soit située dans le prolongement l'une de l'autre, ce dispositif comprenant une tête de soudage à arc électrique introduite dans la cavité des deux pièces, cette tête de soudage étant montée mobile à l'intérieur de la cavité, tout en restant située au niveau du plan de joint des deux pièces.

Selon une caractéristique essentielle de l'invention, ce dispositif comprend en outre une bobine électromagnétique fixe disposée de façon à entourer au moins l'une des deux pièces à souder, en créant ainsi, au niveau de l'arc électrique, un champ électromagnétique situé sensiblement perpendiculairement au plan de joint des deux pièces, et un moyen de commande de l'inversion périodique dudit champ électromagnétique, créant en conséquence un balayage longitudinal de l'arc électrique.

Ce dispositif de soudage propre à l'invention peut s'appliquer avantageusement, par exemple, à l'assemblage par soudage d'une plaque de forte épaisseur, percée d'un alésage, avec un manchon cylindrique dont l'alésage a un diamètre sensiblement égal au diamètre de l'alésage de la plaque. Dans ce cas, la bobine électromagnétique fixe est placée concentriquement autour du manchon cylindrique.

On voit par conséquent qu'un dispositif de soudage électrique conforme à notre invention permet de réaliser un balayage longidutinal de l'arc électrique en utilisant toutefois une tête de soudage très simple puisque dépourvue de tout système destiné au balayage de l'arc. Ce dispositif permet en conséquence le soudage à l'intérieur d'alésages de très petit diamètre.

D'autres avantages du dispositif selon l'invention apparaîtront lors de la description qui va suivre en se référant à un mode de réalisation particulier, donné à titre d'exemple, illustré par les dessins annexés.

La figure 1 est une vue en coupe longitudinale d'un dispositif de soudage propre à l'invention.

La figure 2 est une vue en coupe selon A-A de la figure 1.

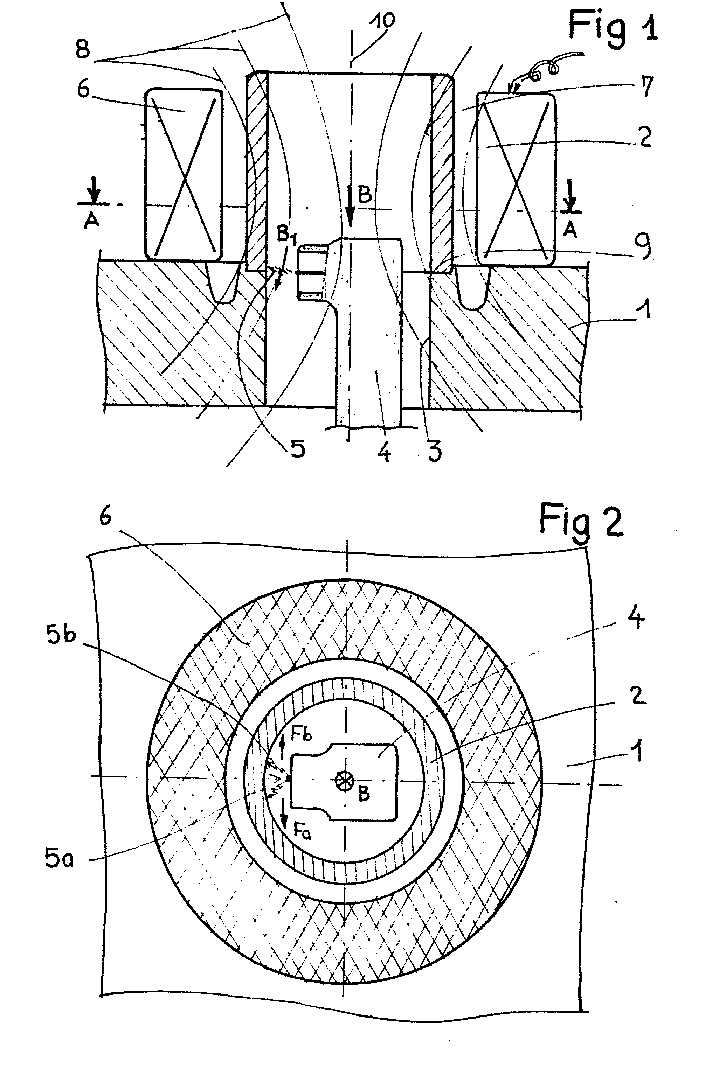

Sur la figure 1 on distingue une plaque métallique relativement épaisse 1 comprenant un alésage 3. Sur la face supérieure de la plaque 1, est disposé un manchon cylindrique 2 dont l'alésage 7 est dans l'alignement de l'alésage 3 de la plaque, ces deux alésages ayant sensiblement le même diamètre. L'assemblage de ces pièces consiste à réaliser une soudure des deux pièces 1 et 2 au niveau de leur zone en contact 9. Pour réaliser une telle soudure, on introduit dans l'alésage 3 ou 7 une tête de soudage 4 à arc électrique que l'on dispose au niveau du plan de joint 9 et que l'on anime d'un mouvement de rotation autour de l'axe 10 de l'alésage 3. La distance séparant l'électrode de la tête de soudage 4 et la surface des alésages 3 et 7 est par conséquent constante et réglée de façon à créer un arc électrique 5 au niveau du plan de joint 9.

On a remarqué que, dans les conditions précédemment décrites, l'arc électrique 5 présente une certaine instabilité, et la soudure qui en résulte ne donne pas entièrement satisfaction.

Pour résoudre ce problème, il est prévu une bobine électromagnétique 6 en forme d'anneau, cette bobine fixe 6 étant disposée concentriquement autour du manchon cylindrique 2. Les spires de cette bobine forment donc des cercles autour du manchon cylindrique 2, et leur alimentation en courant électrique crée un champ magnétique de résultante B confondu avec l'axe 10. Les lignes de champ magnétique 8 s'étendent donc sensiblement longidutinalement à l'intérieur des alésages 3 et 7, créant ainsi au niveau de l'arc électrique 5 un champ magnétique B1 de direction sensiblement perpendiculaire, à la fois à l'arc électrique 5 et au plan de joint 9.

En se reportant à la figure 2, on voit que le champ magnétique local B1 au niveau de l'arc électrique 5 crée une action $F_a$ qui tend à déplacer l'arc électrique 5 en 5a, longitudinalement par rapport à la direction du cordon de soudure. Une inversion de sens du courant électrique traversant la bobine 6 inverse en conséquence l'action de déviation sur l'arc électrique 5 pour l'amener en 5b grâce à une action opposée F6 du champ magnétique. L'arc électrique 5 subit donc un balayage entre les limites 5a et 5b, ce balayage étant longitudinal par rapport au cordon de soudure, c'est à dire que l'arc électrique 5 oscille tout en restant dans le plan de joint 9. Bien sûr, l'action de balayage de l'arc électrique est exactement la même pour toute position angulaire de la tête de soudage 4, puisqu'il y a une symétrie par rapport à l'axe longitudinal 10 des lignes de champ magnétique 8.

De nombreux essais ont montré qu'un tel dispositif de soudage permet la réalisation de soudures de très bonne qualité, très régulières, permet aussi d'augmenter la profondeur de pénétration de ces soudures en diminuant l'étalement en largeur. Ce dispositif de soudage permet l'utilisation d'une tête de soudage de conception très simple, puisque dépourvue de dispositif de balayage, et donc miniaturisable . Il est donc possible, avec le dispositif propre à notre invention, d'effectuer des soudages de très bonne qualité effectués depuis l'intérieur d'alésages, même si ces alésages sont de très petite dimension.

Le dispositif de soudage qui vient d'être décrit peut s'appliquer à des pièces à souder de formes diverses, et notamment, comprenant une cavité de forme  non circulaire , par exemple carrée. Dans ce cas, la tête de soudage 4 ne tourne pas autour de l'axe longitudinal 10 mais décrit un chemin fermé situé dans le plan de joint 9 et qui reste à une distance constante de la paroi de la cavité sur laquelle se constitue le cordon de soudure.

De très bons résultats seront obtenus en utilisant notamment une tête de soudage à arc électrique du type, connu en soi, à électrode non consommable et à atmosphère neutre.

L'invention ne se limite pas au mode de réalisation qui vient d'être décrit à titre d'exemple ; elle en comporte au contraire toutes les variantes de réalisation et elle peut être appliquée au soudage de pièces de formes diverses.

REVENDICATION

1.- Dispositif de soudage à arc électrique destiné à l'assemblage de deux pièces creuses disposées de façon que leur cavité respective soit située dans le prolongement l'une de l'autre, comprenant - une tête de soudage à arc électrique introduite dans la cavité des deux pièces, cette tête étant montée mobile à l'intérieur de la cavité en restant située au niveau du plan de joint des deux pièces, - une bobine électromagnétique créant au niveau de l'arc électrique un champ magnétique, -et un moyen de commande de l'inversion dudit champ magnétique entrainant un balayage de l'arc électrique, caractérisé par le fait que la bobine électromagnétique (6) fixe entoure au moins l'une des deux pièces à souder pour que le champ magnétique (B1) soit sensiblement perpendiculaire à la fois à l'arc électrique (5) et au plan de joint des deux pièces et que l'inversion périodique du champ magnétique provoque le balayage (5a-5b) de l'arc électrique (5) dans ledit plan de joint et longitudinalement par rapport au cordon de soudure réalisé.

0095429

1/1

Fig 1

Fig 2

Office européen
des brevets

**RAPPORT DE RECHERCHE EUROPEENNE**

**0095429**
Numéro de la demande

EP 83 40 1056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-A-2 651 878 (DAIMLER-BENZ)<br>* Revendication 2 *<br><br>--- | 1 | B 23 K 9/08 |
| Y | EP-A-0 003 590 (INDUSTRIE-WERKE KARLSRUHE AUGSBURG)<br>* Résumé; figure 2 *<br><br>--- | 1 | |
| A | FR-A-1 362 337 (FOSTER WHEELER)<br><br>----- | | |

DOMAINES TECHNIQUES RECHERCHES (Int. Cl. ³)

B 23 K

Le présent rapport de recherche a été établi pour toutes les revendications

| Lieu de la recherche | Date d'achèvement de la recherche | Examinateur |
|---|---|---|
| LA HAYE | 25-07-1983 | HOORNAERT W. |